# EUROPEAN PATENT SPECIFICATION

(11) **EP 1 875 812 B1**
(45) Date of publication and mention of the grant of the patent: **01.11.2017**
(21) Application number: 06730986.4
(22) Date of filing: 03.04.2006
(51) Int. Cl.: A23L 5/00

(54) **RAPIDLY SOLUBLE GRANULE AND METHOD FOR PRODUCING THE SAME**
SCHNELLLÖSLICHES GRANULAT UND VERFAHREN ZU SEINER HERSTELLUNG
GRANULE RAPIDEMENT SOLUBLE ET MÉTHODE DE PRODUCTION DUDIT GRANULE

(30) Priority: 28.04.2005 JP 2005130659
(43) Date of publication of application: 09.01.2008
(73) Proprietor: Meiji Co., Ltd., Chuo-ku Tokyo 104-8306 (JP)
(72) Inventor: OHARA, Yoshio, Meiji Co., Ltd., Tokyo 104-8306 (JP); TANAKA, Akio, Meiji CO., Ltd., Tokyo 104-8306 (JP); MAGARIKAJI, Tetsuya, Meiji Co., Ltd., Tokyo 104-8306 (JP)
(74) Representative: Busher, Samantha Jane
(86) International application number: PCT/JP2006/307038
(87) International publication number: WO 2006/117958

(56) References cited:
- EP-A- 0 196 434
- EP-A- 0 352 190
- WO-A-03/030872
- DE-B1- 2 828 992
- JP-A- 01 013 976
- JP-A- 06 113 755
- JP-A- 08 056 604
- JP-A- 2005 013 004
- JP-A- 2005 021 016
- JP-A- 2006 006 111

## Description

### Technical Field

The present invention relates to rapidly soluble granules that are rapidly sedimented and readily dispersed or dissolved in water and a method for producing the same.

### Background Art

Some powdery raw materials used for foods or beverages are poorly sedimented when added to water even with agitation. Thus, such powdery raw materials remain floating on the water surface. In general, such powdery raw materials are granulated such that they are improved in terms of sedimentation, allowing the obtained granules to be readily dispersed or dissolved in water. The following are examples of a granulation method: a granulation method wherein powder particles of a powdery raw material of interest are allowed to bind to one another; and a granulation method wherein a powdery raw material of interest is allowed to bind to a water-soluble raw material for improvement of the ability of the powdery raw material to absorb water.

However, some powdery raw materials are poorly sedimented even when in the form of granules and thus they are dispersed or dissolved in water only with difficulty. Hitherto, various attempts have been made to obtain granules that are readily dispersed or dissolved in water with the use of such powdery raw materials. For instance, regarding soybean protein powder and cocoa powder, the following methods and other methods have been suggested: a method wherein water-soluble polysaccharide and sugar alcohol are used as binders (Patent Document 1); and a method wherein hydrolyzed soybean proteins are used (Patent Document 2). However, the above methods are limited to application to soybean protein powder and cocoa powder. Thus, it cannot be said that it is possible to apply such methods to generally-used powdery raw materials that have the aforementioned characteristics. Also, granules obtained by such methods are not sufficiently dispersed for dissolved.
Patent Document 1: JP Patent Publication (Kokai) No. 10-56969 A (1998)
Patent Document 2: JP Patent Publication (Kokai) No. 10-174555 A (1998)

JP 08 056604A discloses a method of pulverizing an edible oily material with a coating-forming agent.

JP 2005 021016A discloses a water-soluble powdery or granular food comprising triglycerol behenic acid ester.

JP 2005 013004A discloses a granular food comprising a solid fat and an emulsifier, corn powder, dry whole milk, cocoa and the like.

JP 01 013976A discloses a food product that is obtained by fluidising and granulating a base powder comprising a soup or sauce powder and a medium-size chain fat.

### Disclosure of the Invention

Thus, it is an objective of the present invention to provide a method for producing rapidly soluble granules with the use of any powdery raw material that is poorly sedimented in water and thus is dispersed or dissolved with difficulty in water.

As a result of intensive studies to solve the above problem, the present inventors have found that, when granules are obtained by an operation comprising mixing granules having poor sedimentation property and granules having good sedimentation property and simultaneously adding an emulsifier thereto, such granules are rapidly sedimented in water and are readily dispersed or dissolved therein with slow agitation alone. This has led to the completion of the present invention.

Specifically, the present invention encompasses the following inventions.
(1) A method for producing water- soluble granules, comprising mixing granules having poor sedimentation property in water and granules having good sedimentation property in water while adding an emulsifier thereto to thereby obtain mixed granules coated with the emulsifier.
   The granules having poor sedimentation property in water contain at least one main ingredient that is selected from the group consisting of cocoa, whey, casein, soybean, and collagen.
   The granules having good sedimentation property in water contain at least one main ingredient that is selected from the group consisting of carbohydrates and organic acids.
(2) The method according to (1), wherein the granules having good sedimentation property in water are mixed in an amount corresponding to 8% to 100% by weight relative to the weight of the granules having poor sedimentation property in water.
(3) The method according to (1) or (2), wherein the granules having good sedimentation property in water have a bulk specific gravity of 0.2 to 0.6 g/ml.
(4) Water- soluble granules, characterized in that the water- soluble granules are composed of granules having poor sedimentation property in water and granules having good sedimentation property in water mixed together and that the surfaces of the mixed granules are coated with an emulsifier, wherein the granules having poor sedimentation property and the granules having good sedimentation property are as defined above.

Hereafter, the present invention is described in greater detail. This application claims the priority of Japanese Patent Application No. 2005-130659 filed on April 28, 2005, and it includes part or all of the contents as disclosed in the description of the patent application.

### Effects of the Invention

According to the present invention, the method provided is a method for producing rapidly soluble granules with the use of any powdery raw material that is poorly sedimented in water and thus is dispersed or dissolved with difficulty in water. Rapidly soluble granules obtained by the method of the present invention are rapidly sedimented in water and are readily dispersed or dissolved therein with slow agitation alone. Thus, such granules are handy and convenient. Therefore, the rapidly soluble granules of the present invention are useful for granule-type foods or beverages that are conveniently used for ingestion of collagen, polyphenol (cocoa), isoflavone (soybean), and the like which have been recently gaining attention and are much in demand as functional food components.

### Best Mode for Carrying Out the Invention

The present invention relates to a method for producing water-soluble granules, comprising mixing granules having poor sedimentation property in water and granules having good sedimentation property in water while adding an emulsifier thereto to thereby obtain mixed granules coated with the emulsifier.

According to the present invention, the term "rapidly soluble" means not only a state of being rapidly sedimented and being readily dissolved in water with slow agitation alone but also a state of being readily dispersed in water while becoming partially dissolved or remaining undissolved at all therein.

According to the present invention, the term "granules having poor sedimentation property in water" indicates granules that are obtained by granulating a powdery raw material having poor sedimentation property in water and that is not improved in terms of sedimentation even when in the form of granules. The term "powdery raw material having poor sedimentation property in water" used herein indicates a powdery material that mostly floats on the water surface when added to water and is not readily dispersed or dissolved even with slow agitation using a spoon or the like. As a result, such material forms lumps that remain on the water surface. Examples of such material include cocoa, whey, casein, soybean, and collagen in the form of powder. These examples may be used alone or in combinations of two or more.

Examples of a binder solution that can be used for granulation of a powdery raw material having poor sedimentation property in water include an aqueous solution containing a collagen peptide or a polysaccharide thickener such as pullulan, gum Arabic, or guar gum. In particular, when collagen powder is used as a powdery raw material to be granulated, a collagen peptide aqueous solution is preferably used as a binder solution, because collagen powder has a good affinity for such an aqueous solution. In addition, in such case, a sweetener such as sucralose or acesulfame potassium and/or the like may be added to a binder solution. Examples of a granulation method that can be adequately selected include, but are not particularly limited to, fluidized bed granulation and tumbling granulation.

Meanwhile, according to the present invention, the term "granules having good sedimentation property in water" indicates granules having good sedimentation property in water that are rapidly sedimented when added to water with slow agitation according to need. Such granules can be obtained by, granulating one of or both a carbohydrate and an organic acid. Granulation methods are not particularly limited, and thus a different binder solution to be used for granulation can be adequately selected.

Examples of a carbohydrate used herein include sucrose, glucose, maltose, fructose, trehalose, sorbitol, maltitol, xylitol, oligosaccharide, dextrine, and soluble starch. Examples of an organic acid include citric acid, malic acid, and tartaric acid. Such carbohydrate or organic acid may be used alone or in combinations of two or more.

Further, the bulk specific gravity of granules having good sedimentation property in water is preferably 0.2 to 0.6 g/ml. When the bulk specific gravity of such granules is less than 0.2 g/ml, granules obtained as final products have a low specific gravity and thus become less likely to be sedimented. When the bulk specific gravity is more than 0.6 g/ml, granules obtained as final products absorb water with difficulty and thus become less likely to be sedimented. In addition, the term "bulk specific gravity" used herein indicates a value that is measured by a powder tester TYPE-PT-E (Hosokawa Micron Corporation) for 180 seconds with 180 times of vibration.

In addition, the above granules having poor sedimentation property in water and granules having good sedimentation property in water contain main ingredients, none of which are derived from a binder solution.

According to the method of the present invention, an emulsifier is added during the mixing of the granules having poor sedimentation property in water and the granules having good sedimentation property in water described above. Preferably, the granules having good sedimentation property in water are mixed in an amount corresponding to 8% to 100% by weight relative to the weight of the granules having poor sedimentation property in water. The mixing of the granules having good sedimentation property in water in an amount corresponding to not less than 8% by weight relative to the weight of the granules having poor sedimentation property in water is effective for the improvement in sedimentation of the resultant. However, when the percentage of the resultant accounted for by granules having good sedimentation property in water becomes greater, the content of the raw material having poor sedimentation property in water decreases relatively thereto. Thus, in view of the purposes of the present invention, the granules having good sedimentation property in water are preferably used in an amount corresponding to not more than 100% by weight relative to the weight of the granules having poor sedimentation property in water.

Further, a method for adding an emulsifier is not particularly limited. However, it is preferable to use a method for spraying an emulsifier with the use of a spraying apparatus so as to uniformly and entirely coat the surfaces of mixed granules with the necessary amount of the emulsifier. Furthermore preferably, a method for spraying fat or oil in which an emulsifier has been dispersed is used. It is possible to adequately determine the amount of emulsifier to be used based on the extent of the effect thereof, the influence thereof upon the taste, the cost, and the like. For instance, when fat or oil in which an emulsifier has been dispersed is added, it is preferable to use such fat or oil in an amount corresponding to 0.5% to 5% by weight relative to the weight of the above mixed granules obtained by mixing granules having poor sedimentation property in water and granules having good sedimentation property in water. It is difficult to uniformly and entirely add such fat or oil in an amount corresponding to less than 0.5% by weight relative to the weight of the mixed granules. With the addition of such fat or oil in an amount corresponding to more than 5% by weight relative to the weight of the mixed granules, such mixed granules tend to become sticky.

An emulsifier used is not particularly limited as long as it has an effect of allowing mixed granules to be readily moistened. Examples of an emulsifier that can be used include lecithin, glycerol esters of fatty acids, polyglycerol esters of fatty acids, sucrose esters of fatty acids, and sorbitan esters of fatty acids. These emulsifiers may be used alone or in combinations of two or more.

The temperature for mixing the above two different granules is not particularly limited. However, in the cases in which a heat-sensitive raw material is used, mixing is preferably carried out at 50°C or less. In addition, upon mixing, it is possible to add small amounts of flavors, vitamins, and the like depending on the type of foods or beverages.

Mixed granules obtained as above are rapidly sedimented in water without forming lumps, and they exhibit good dispersibility or solubility.

### Examples

The present invention is hereafter described in greater detail with reference to the following examples, although the technical scope of the present invention is not limited thereto.

### (Example 1)

Defatted soybean powder (70 parts by weight) was placed in a fluidized bed granulator for fluidization at 65°C. During fluidization, a binder solution (20 parts by weight) obtained by dissolving gum Arabic (10% by weight) and sucralose (0.1% by weight) in water was sprayed thereinto for granulation. After spraying, the resultant was dehydrated at 85°C until the amount of moisture thereof was reduced to an amount representing 4% by weight. The resulting defatted soybean granules (88 parts by weight) were mixed with trehalose granules (12 parts by weight) having a bulk specific gravity of 0.35 g/ml. During mixing, salad oil (1 part by weight) containing lecithin (0.2% by weight) and glycerol fatty acid ester (10% by weight) was sprayed thereinto. When the obtained mixed granules were added to water, they were rapidly sedimented and dispersed with slow agitation alone.

### (Example 2)

Cocoa powder (70 parts by weight) was placed in a fluidized bed granulator for fluidization at 65°C. During fluidization, a binder solution (20 parts by weight) obtained by dissolving pullulan (10% by weight) in water was sprayed thereinto for granulation. After spraying, the resultant was dehydrated at 85°C until the amount of moisture thereof was reduced to an amount representing 4% by weight. The resulting cocoa granules (75 parts by weight) were mixed with sugar granules (24 parts by weight) having a bulk specific gravity of 0.27 g/ml. During mixing, salad oil (4.5 parts by weight) containing lecithin (0.2% by weight) and glycerol fatty acid ester (10% by weight) was sprayed thereinto. When the obtained mixed granules were added to water, they were rapidly sedimented and dispersed with slow agitation alone.

### (Example 3)

Collagen powder (70 parts by weight) was placed in a fluidized bed granulator for fluidization at 65°C. During fluidization, a binder solution (20 parts by weight) obtained by dissolving collagen peptide (30% by weight) in water was sprayed thereinto for granulation. After spraying, the resultant was dehydrated at 85°C until the amount of moisture thereof was reduced to an amount representing 4% by weight. The resulting collagen granules (75 parts by weight) were mixed with dextrine granules (24 parts by weight) having a bulk specific gravity of 0.55 g/ml and sodium ascorbate (1 part by weight). During mixing, salad oil (2 parts by weight) containing sucrose fatty acid ester (10% by weight) was sprayed thereinto. When the obtained mixed granules were added to water, they were rapidly sedimented and dispersed or dissolved with slow agitation alone.

### (Example 4)

Casein powder (70 parts by weight) was placed in a fluidized bed granulator for fluidization at 65°C. During fluidization, a binder solution (20 parts by weight) obtained by dissolving pullulan (10% by weight) and sucralose (0.1% by weight) in water was sprayed thereinto for granulation. After spraying, the resultant was dehydrated at 85°C until the amount of moisture thereof was reduced to an amount representing 4% by weight. The resulting casein granules (88 parts by weight) were mixed with dextrine granules (12 parts by weight) having a bulk specific gravity of 0.55 g/ml. During mixing, salad oil (3 parts by weight) containing lecithin (0.2% by weight) and glycerol fatty acid ester (10% by weight) was sprayed thereinto. When the obtained mixed granules were added to water, they were rapidly sedimented and dispersed with slow agitation alone.

### (Comparative example 1)

Defatted soybean powder (40 parts by weight), cocoa powder (10 parts by weight), sugar powder (20 parts by weight), and powdered whole milk (20 parts by weight) were placed in a fluidized bed granulator for fluidization at 65°C. During fluidization, a binder solution (20 parts by weight) obtained by dissolving pullulan (6% by weight) and erythritol (1% by weight) in water was sprayed thereinto for granulation. After spraying, the resultant was dehydrated at 85°C until the amount of moisture thereof was reduced to an amount representing 4% by weight. When the obtained mixed granules were added to water, they remained floating on the water surface and almost no granules were sedimented, and thus they were not readily dispersed even with agitation.

### (Comparative example 2)

Collagen powder (70 parts by weight), dextrine powder (24 parts by weight) having a bulk specific gravity 0.66 g/ml, and sodium ascorbate (1 part by weight) were placed in a fluidized bed granulator for fluidization at 65°C. During fluidization, a binder solution (20 parts by weight) obtained by dissolving collagen peptide (30% by weight) and sucralose (0.1 % by weight) in water was sprayed thereinto for granulation. After spraying, the resultant was dehydrated at 85°C until the amount of moisture thereof was reduced to an amount representing 4% by weight. When the obtained mixed granules were added to water, they remained floating on the water surface and almost no granules were sedimented, and thus they were not readily dispersed even with agitation.

### (Comparative example 3)

Cocoa powder (73 parts by weight) and sugar powder (24 parts by weight) were placed in a fluidized bed granulator for fluidization at 65°C. During fluidization, a binder solution (20 parts by weight) obtained by dissolving pullulan (10% by weight) in water was sprayed thereinto for granulation. After spraying, the resultant was dehydrated at 85°C until the amount of moisture thereof was reduced to an amount representing 4% by weight. Next, salad oil (4.5 parts by weight) containing lecithin (0.2% by weight) and glycerol fatty acid ester (10% by weight) was sprayed on the obtained granules. When the obtained mixed granules were added to water, they remained floating on the water surface and a small extent of granules were sedimented. Thus, it took time to disperse such granules even when agitating them.

### (Comparative example 4)

Collagen powder (70 parts by weight), dextrine powder (20 parts by weight), and sodium ascorbate (1 part by weight) were placed in a fluidized bed granulator for fluidization at 65°C. During fluidization, a binder solution (20 parts by weight) obtained by dissolving collagen peptide (30% by weight) and sucralose (0.1% by weight) in water was sprayed thereinto for granulation. After spraying, the resultant was dehydrated at 85°C until the amount of moisture thereof was reduced to an amount representing 4% by weight. Next, salad oil (2 parts by weight) containing sucrose fatty acid ester (10% by weight) was sprayed on the obtained granules. When the obtained mixed granules were added to water, they remained floating on the water surface and a small extent of granules were sedimented. Thus, it took time to disperse such granules even when agitating them.

### (Comparative example 5)

Cocoa powder (70 parts by weight) was placed in a fluidized bed granulator for fluidization at 65°C. During fluidization, a binder solution (20 parts by weight) obtained by dissolving pullulan (10% by weight) in water was sprayed thereinto for granulation. After spraying, the resultant was dehydrated at 85°C until the amount of moisture thereof was reduced to an amount representing 4% by weight. Next, the obtained cocoa granules (75 parts by weight) were mixed with sugar granules (24 parts by weight) having a bulk specific gravity of 0.27 mg/ml. When the obtained mixed granules were added to water, they remained floating on the water surface and a small extent of granules were sedimented. Thus, it took time to disperse such granules even when agitating them.

### Industrial Applicability

The present invention can be used in the field of manufacturing of foods or beverages including granule-type functional foods and supplements that are dispersed or dissolved in water for ingestion.

## Claims

1. A method for producing water-soluble granules, comprising mixing granules having poor sedimentation property in water and granules having good sedimentation property in water while adding an emulsifier thereto to thereby obtain mixed granules coated with the emulsifier, wherein the granules having poor sedimentation property in water contain at least one main ingredient that is selected from the group consisting of cocoa, whey, casein, soybean, and collagen, and wherein the granules having good sedimentation property in water contain at least one main ingredient that is selected from the group consisting of carbohydrates and organic acids.

2. The method according to claim 1, wherein the granules having good sedimentation property in water are mixed in an amount corresponding to 8% to 100% by weight relative to the weight of the granules having poor sedimentation property in water.

3. The method according to claim 1 or 2, wherein the granules having good sedimentation property in water have a bulk specific gravity of 0.2 to 0.6 g/ml.

4. Water-soluble granules, **characterized in that** the water-soluble granules are composed of granules having poor sedimentation property in water and granules having good sedimentation property in water mixed together and that the surfaces of the mixed granules are coated with an emulsifier, wherein the granules having poor sedimentation property in water contain at least one main ingredient that is selected from the group consisting of cocoa, whey, casein, soybean, and collagen, and wherein the granules having good sedimentation property in water contain at least one main ingredient that is selected from the group consisting of carbohydrates and organic acids.

## Patentansprüche

1. Verfahren zur Herstellung von wasserlöslichem Granulat, umfassend das Vermischen von Granulat, das in Wasser ein mangelhaftes Sedimentationsvermögen aufweist und Granulat, das in Wasser ein gutes Sedimentationsvermögen aufweist, während dazu ein Emulgator hinzugegeben wird, um dadurch vermischtes Granulat zu erhalten, das mit dem Emulgator beschichtet ist, wobei das Granulat, das in Wasser ein mangelhaftes Sedimentationsvermögen aufweist, mindestens einen Hauptbestandteil enthält, der aus der Gruppe ausgewählt ist, bestehend aus Kakao, Molke, Casein, Sojabohne und Kollagen, und wobei das Granulat, das in Wasser ein gutes Sedimentationsvermögen aufweist, mindestens einen Hauptbestandteil enthält, der aus der Gruppe ausgewählt ist, bestehend aus Kohlenhydraten und organischen Säuren.

2. Verfahren nach Anspruch 1, wobei das Granulat, das in Wasser ein gutes Sedimentationsvermögen aufweist, in Bezug auf das Gewicht des Granulats, das in Wasser ein mangelhaftes Sedimentationsvermögen aufweist, in einer Menge vermischt wird, die 8 Gew.-% bis 100 Gew.-% entspricht.

3. Verfahren nach Anspruch 1 oder 2, wobei das Granulat, das in Wasser ein gutes Sedimentationsvermögen aufweist, ein spezifisches Schüttgewicht von 0,2 bis 0,6 g/ml aufweist.

4. Wasserlösliches Granulat, **dadurch gekennzeichnet, dass** sich das wasserlösliche Granulat aus Granulat, das in Wasser ein mangelhaftes Sedimentationsvermögen aufweist und Granulat zusammensetzt, das in Wasser ein gutes Sedimentationsvermögen aufweist, die vermischt werden und dass die Oberfläche des vermischten Granulats mit einem Emulgator beschichtet wird, wobei das Granulat, das in Wasser ein mangelhaftes Sedimentationsvermögen aufweist, mindestens einen Hauptbestandteil enthält, der aus der Gruppe ausgewählt ist, bestehend aus Kakao, Molke, Casein, Sojabohne und Kollagen, und wobei das Granulat, das in Wasser ein gutes Sedimentationsvermögen aufweist, mindestens einen Hauptbestandteil enthält, der aus der Gruppe ausgewählt ist, bestehend aus Kohlenhydraten und organischen Säuren.

## Revendications

1. Procédé pour produire des granules hydrosolubles, comprenant le mélange de granules ayant une mauvaise propriété de sédimentation dans l'eau et des granules ayant une bonne propriété de sédimentation dans l'eau tout en y ajoutant un émulsifiant pour obtenir ainsi des granules mélangées revêtues de l'émulsifiant, les granules ayant une mauvaise propriété de sédimentation dans l'eau contenant au moins un principal ingrédient qui est sélectionné dans le groupe comprenant : cacao, lactosérum, caséine, soja et collagène, et les granules ayant une bonne propriété de sédimentation dans l'eau contenant au moins un principal ingrédient qui est sélectionné dans le groupe comprenant des glucides et des acides organiques.

2. Procédé selon la revendication 1, dans lequel les granules ayant une bonne propriété de sédimentation dans l'eau sont mélangées dans une quantité correspondant à 8 % à 100 % en poids par rapport au poids des granules ayant une mauvaise propriété de sédimentation dans l'eau.

3. Procédé selon la revendication 1 ou 2, dans lequel les granules ayant une bonne propriété de sédimentation dans l'eau ont un poids spécifique apparent de 0,2 à 0,6 g/ml.

4. Granules hydrosolubles, **caractérisées en ce que** les granules hydrosolubles sont composées de granules ayant une mauvaise propriété de sédimentation dans l'eau et de granules ayant une bonne propriété de sédimentation dans l'eau mélangées ensemble, et **en ce que** les surfaces des granules mélangées sont revêtues d'un émulsifiant, les granules ayant une mauvaise propriété de sédimentation dans l'eau contenant au moins un principal ingrédient qui est sélectionné dans le groupe comprenant : cacao, lactosérum, caséine, soja et collagène, et les granules ayant une bonne propriété de sédimentation dans l'eau contenant au moins un principal ingrédient sélectionné dans le groupe comprenant des glucides et des acides organiques.
